# EUROPEAN PATENT SPECIFICATION

(11) **EP 2 014 444 B1**
(45) Date of publication and mention of the grant of the patent: **07.09.2011**
(21) Application number: 08012138.7
(22) Date of filing: 04.07.2008
(51) Int. Cl.: B29C 51/14, B29C 70/04, B32B 27/32, F41H 1/08, B29C 70/46, B29C 70/08, B29C 53/36, B29C 53/38

(54) **Three dimensional molded thermoplastic article and method of its manufacturing**
Dreidimensionaler thermoplastischer Formartikel und Verfahren zu seiner Herstellung
Article thermoplastique moulé tridimensionnel et méthode pour sa fabrication

(30) Priority: 11.07.2007 US 827298
(43) Date of publication of application: 14.01.2009
(73) Proprietor: Milliken & Company, Spartanburg, SC 29303 (US)
(72) Inventor: Hayes, Heather J., Chesnee, SC 29323 (US); Eleazer, Howell B., Moore, SC 29369 (US); Cates, Elizabeth, Duncan, SC 29334 (US)
(74) Representative: HOFFMANN EITLE

(56) References cited:
- EP-A- 1 403 038
- EP-A- 1 409 244
- EP-A- 1 650 021
- EP-A- 1 787 790
- WO-A-2004/028803
- WO-A-2006/107197
- WO-A-2007/038048
- CA-A1- 1 262 313
- DE-A1- 4 301 423
- US-A- 3 655 503
- US-A- 4 227 612
- US-A- 4 558 463
- US-A- 4 620 895
- US-A- 5 578 370
- US-A1- 2006 091 158
- US-A1- 2006 276 105
- US-A1- 2007 071 960
- PEIJS T: "COMPOSITES FOR RECYCLABILITY" MATERIALS TODAY, ELSEVIER SCIENCE, KIDLINGTON, GB, vol. 6, no. 4, 1 April 2003 (2003-04-01), pages 30-35, XP008048401 ISSN: 1369-7021

## Description

### BACKGROUND OF THE INVENTION

The present invention generally relates to a three dimensional molded thermoplastic article and the method for making the same, and, in more particular, a three dimensional molded article formed from highly drawn thermoplastic tapes that are protected by an outer film and the method for making the same.

Documents EP-A-1650021, WO-A-2006107197 disclose a three dimensional molded thermoplastic article according to preamble of claim 1, documents EP-A-1787790 and WO-A-2007038048 disclose a method for making the same according to preamble of claim 9.

### BRIEF DESCRIPTION OF THE DRAWINGS

FIG. 1 illustrates a three dimensional article 10 in the form of a canoe 11, fabricated with highly drawn thermoplastic tapes according to the present invention;

FIG. 2 illustrates a three dimensional article 10 in the form of a helmet 12, fabricated with highly drawn thermoplastic tapes according to the present invention;

FIG. 3 illustrates the composite wall 100 of the three dimensional article in FIGS. 1 and 2, respectively;

FIG. 4 is an enlarged perspective view of one embodiment of a tape 200 in the composite wall 100 in FIG. 3;

FIG. 5A is an enlarged cross sectional view of a woven version of the tape layers 300 in the composite wall 100 of FIG. 3;

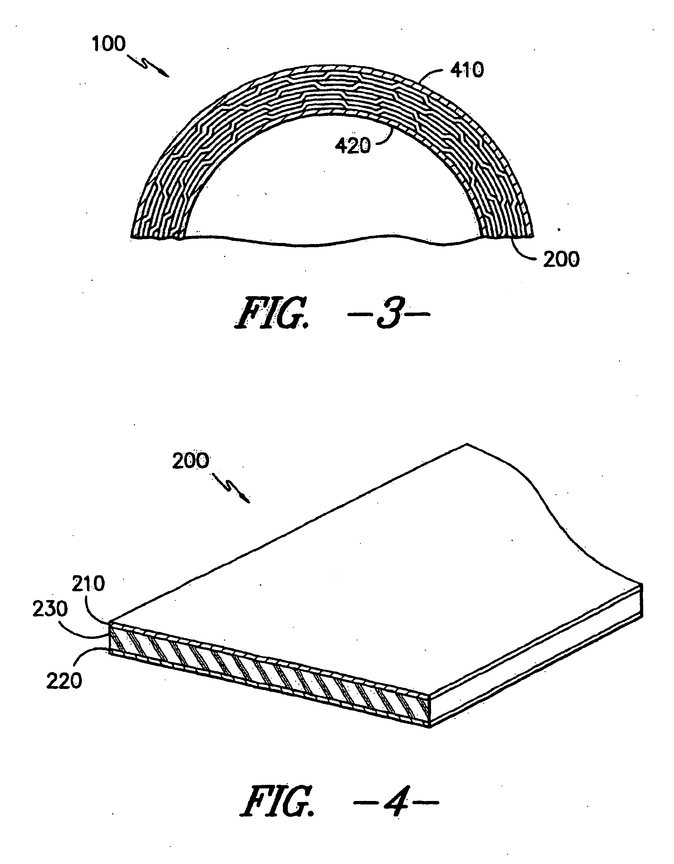

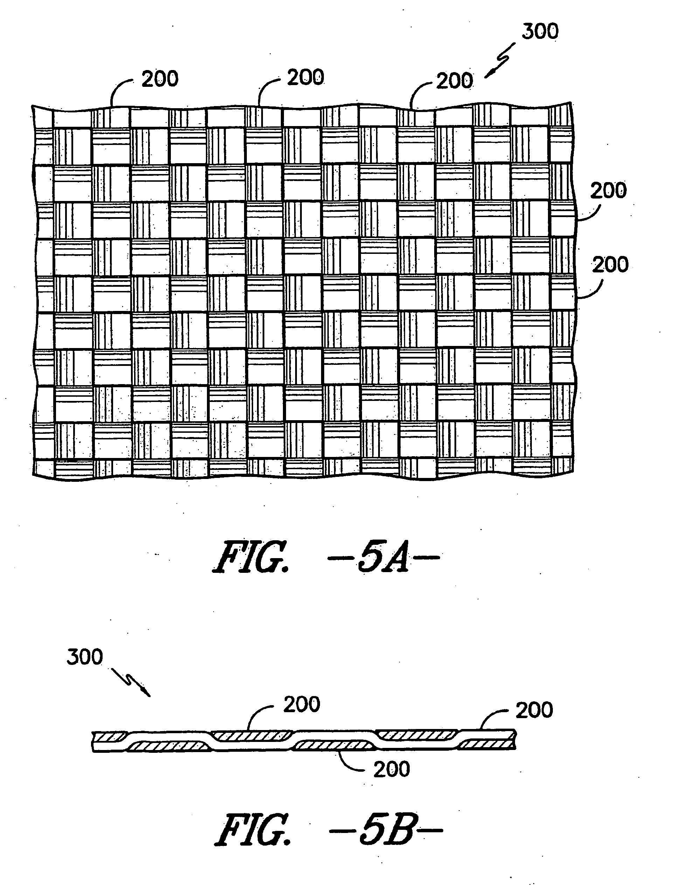

FIG. 5A is a plan view of a woven version of the tape layers 300 in the composite wall 100 of FIG. 3;

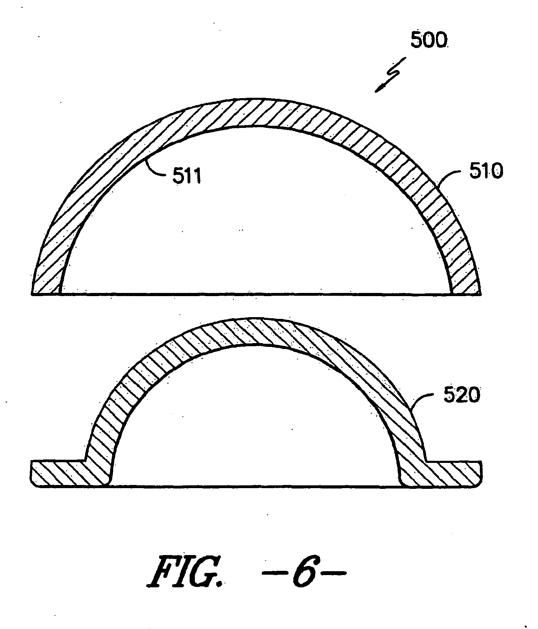

FIG. 6 is an illustration of one embodiment of a mold 500 for use in the process of the present invention; and,

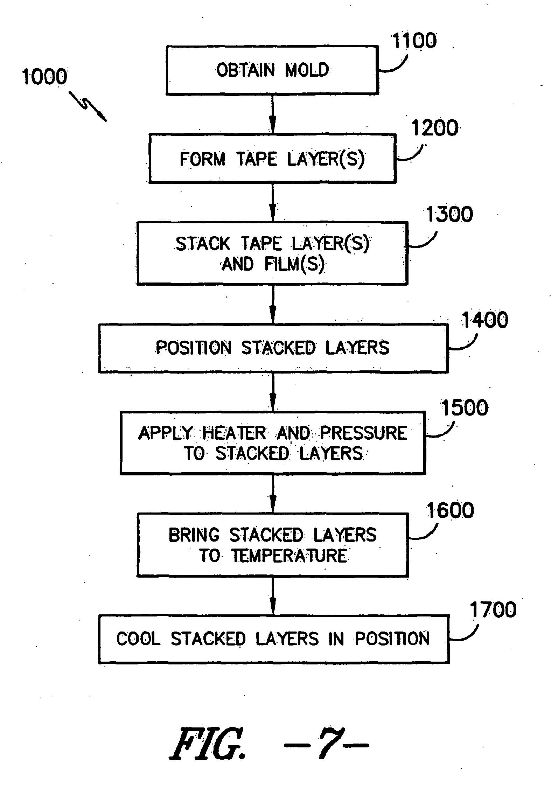

FIG. 7 is a flow diagram illustrating the process of the present invention 1000 for forming three dimensional molded articles from highly drawn thermoplastic tapes with a protective exterior film.

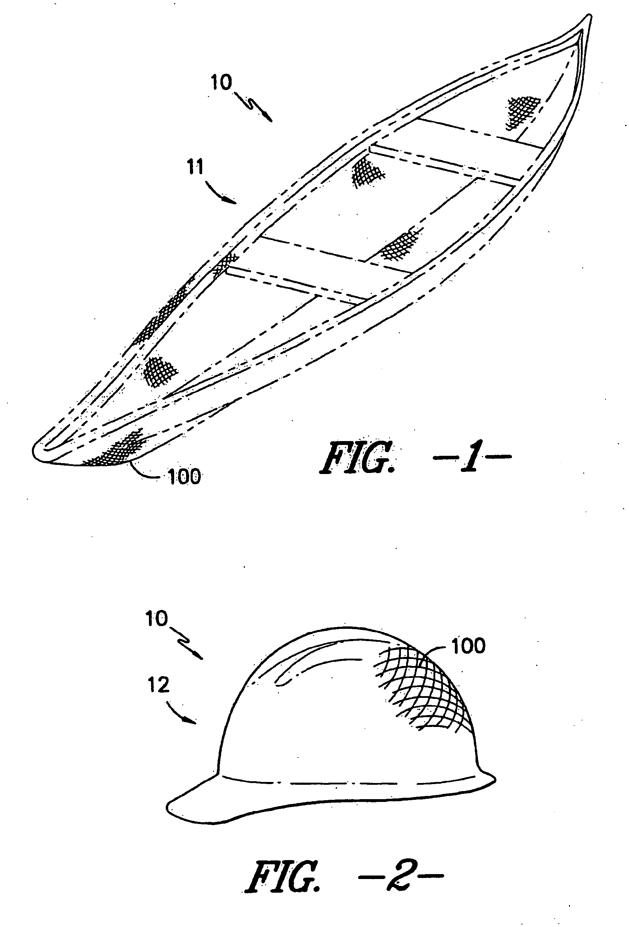

Referring now to the figures, and in particular to FIGS. 1 and 2, there is illustrated a three dimensional molded article, in the form of a canoe 11 and a helmet 12, respectively. The three dimensional molded article 10 of the present invention has a compound curvature with at least one contour having a depth to width ratio of at least about 0.2, or greater. The three dimensional molded article 10 includes a composite wall 100 formed of thermoplastic material, as illustrated in FIG. 3.

Referring now to FIG. 3, the composite wall 100 is formed of tapes 200, and has a thickness of at least eight (8) tapes 200. In the embodiment illustrated in FIG. 3, the tapes 200 are grouped in the composite wall 100 in tape layers 300. The composite wall 100 has at least one film layer, a first film layer 410, bonded to the exterior of the tapes 200 and disposed on the exterior of the composite wall 100. As illustrated, the present invention also includes a second film layer 420.

Referring now to FIG. 4, there is shown an enlarged perspective view of a tape 200 in the composite wall 100 of FIG. 3. As shown in FIG. 4, the tape 200 has a cross sectional width greater than the cross sectional height. In a preferred embodiment, the cross sectional width of the tape 200 is at least ten (10) times greater than the cross sectional height of the tape 200. The tape 200 includes an inner layer 230, a first outer layer 210, and a second outer layer 220. The first outer layer 210 and the second outer layer 220 extend across a majority of the cross sectional width of the tape 200. The outer layers 210 and 220 typically account for 30% or less of the total thickness of the tape 200.

The inner layer 230 of the tape 200 is the highly drawn, or oriented, along the longitudinal direction resulting from having been subjected to a high draw ratio. Generally, and especially when polypropylene or random copolymers of polypropylene are used, it is preferred that the draw ratio be greater than about 7:1, and that the tapes 200 have a tensile modulus greater than about 8 gigapascals. A modulus of about 12 gigapascals or greater is more preferred.

The material of the first outer layer 210 and the second outer layer 220 of the tape 200 have a peak melting temperature that is lower than the peak melting temperature for material of the inner layer 230. It is preferred that the difference between the peak melting temperature of material of the outer layers 210 and 220 be at least about 10°C lower than the peak melting temperature of the material of the inner layer 230.

Referring now to FIGS. 5A and 5B, there is shown a plan view and a cross sectional view, respectively, of a tape layer 300 in the composite wall 100 of FIG. 3. As illustrated in FIG. 5, the tape layer 300 includes a plurality of tapes 200 joined together to form the tape layer 300. The tapes 200 can be joined into the tape layer 300 by weaving into a fabric, such as a twill weave, plan weave, sateen weave, or other type of fabric. In another embodiment, the tapes 200 can be knitted into a unified web. In another embodiment, the tapes 200 may be joined into a layer by bonding the tapes 200 together into a web. In the embodiment where the tapes 200 are bonded into a web, the tapes 200 may be bonded together by mechanisms such as thermal bonding with an adhesive film. One adhesive film that has been used to bond the tapes together into a layer is a polyethylene film. The bonded tapes 200 can be oriented in the same direction (unidirectional), crossing (cross layed), or a combination of the two directions. The tape layer 300 can also be formed as a nonwoven, and the nonwoven can use tape having a length from staple length to continuous filaments. The tape layers 300 can use any of these fabrication methods, and may be a combination of any of these fabrication methods. Additionally, the tape layers 300 can also have a thickness greater than one tape 200. Furthermore, the tape layers 300 can be consolidated into a substantially planar form (having a depth to width ratio of less than 0.2) that is rigid or substantially semi rigid prior to forming the composite wall 100.

Referring back now to FIGS. 3, 4, and 5, the composite wall 100 has a thickness of at least eight (8) tapes 200. The film layer 410 is disposed exterior to the tapes 200 and forms an outer surface of the composite wall 100. The second film layer 420 is disposed at the opposing exterior of the tapes 200 forming the outer surface of the composite wall 100 opposite to the first film layer 410. The polymer of the films 410 or 420 is selected for abrasion resistance, peel strength between film and the outer layers 210 and 220 of the tapes 200, tear strength, moldability, and the ability to release from the mold after the molding process. Additionally, the film can incorporate other beneficial environmental and/or performance improvements, such as color, UV stability, fire resistance chemistry, and others. In an embodiment where the tapes 200 comprise polypropylene or a random copolymer of propylene, it has been found that the same material works well for the films 410 and 420.

The first film layer 410 and the second film layer 420 may have multiple sub-layers. It is preferred that the portion of the first film layer 410 and the second film layer 420 that engages the tapes 200 is a material that is fusible with the first outer surface 210 and the second outer surface 220 of the tapes 200. Additionally, the material that forms the outer surfaces of the films 410 and 420 is fusible with itself at the molding temperature. The ability of the inner surface to fuse with itself, and the outer layer to fuse with itself, allows the film 410 or 420 to fold over in the molding process and fuse together as against the tapes 200 as if the film were a single layer in the area of the fold over. This feature allows the molding process to form compound contours in the molded part and maintain protection of tapes by the film, particularly where at least one of the contours has a width to depth ratio of at least about 0.2.

In one embodiment, the first outer layer 210 of the tapes 200, the second outer layer 220 of the tapes 200, and the films 410 and 420 are a thermoplastic polymer composed from at least 85% of a propylene monomer. The thickness of the films 410 or 420 should be at least about 25 micrometers, or greater. If the films 410 or 420 are greater than about 1,000 micrometers, this adds more weight to the part without gaining any corresponding improvement on the abrasion resistance. A preferred range of the thickness of the films 410 or 420 is from about 50 micrometers to about 500 micrometers.

Referring now to FIG. 6, there is illustrated a mold 500 for forming a three dimensional article according to the present invention. As illustrated in FIG. 6, the mold 500 has two portions, a contour defining mold portion 510 with a contour defining surface 511, and a pressure applying mold portion 520. The contour defining surface 511 of the mold 500 provides a reference surface for the tape 200 and films 410 and 420 that forms the composite wall 100, to receive the definition of the contour for the three dimensional article 10. As illustrated, the contour defining mold portion 510 of the mold 500 is a female portion of the mold 500, but, the contour defining mold portion 50 of the mold 500 could alternatively be the male portion of the mold 500.

The pressure applying portion 520 of the mold 500 applies pressure to the tapes 200 and films 410 and 420 for urging the materials to take the contour defined by the contour defining surface 511. The portion of the pressure applying mold portion 520 that contacts the tapes 200 and films 410 and 420 can be a matched metal portion or a resilient material such as natural or synthetic rubber or silicone rubber. As illustrated, the pressure applying portion 520 of the mold 500 is a male portion of the mold 500, but, the pressure applying portion 520 of the mold 500 could alternatively be the female portion of the mold 500. Alternatively, the pressure bearing mold portion 520 can have a flexible member that urges the tapes 200 and films 410 and 420 against the contour defining surface 511, such as a bladder that is pressurized or a vacuum bag that covers the tapes 200, films 410 and 410, and contour defining surface 511.

In a preferred embodiment, the contour defining mold portion 510 is heat conducting for assisting in increasing the transmission of heat to and from the layers in the mold 500. The contour defining mold portion 510 can be a metal such as steel or aluminum. The pressure applying mold portion 520 can also be heat conductive for assisting in increasing the transmission of heat to and from the tapes 200 and films 410 and 420 in the mold 500.

Referring now to FIG. 7, there is shown a block diagram illustrating the process 1000 of forming a three dimensional molded article 10 according to the present invention. In the present invention, in Step 1100 a mold with a contouring surface is obtained , in Step 1200 the tape layers are formed, in Step 1300 the tape layers and films are stacked in the required order, in Step 1400 the stacked layers of tape and film are placed adjacent to the contour surface of the mold, in Step 1500 heat and pressure are applied to the stack of layers in order to force the stack of layers against the contour surface of the mold, in Step 1600 the stack of layers are brought to a temperature above the onset melting temperature of the film, and in Step 1700 the tapes and films are cooled below the re-crystallization temperature of the films and the outer layers of the tapes while they are held in place against the contour surface of the mold.

Referring now to FIGS. 3 and 6, in the step 1300 of stacking layers, the tape layers 300 are stacked together, and the first film layer 410 is positioned adjacent to the outside of the tape layers 300 with the second film layer 420 applied to the opposing outside of the tape layers 420. The tapes 200 and films 410 and 420 stacked in Step 1300 are positioned in Step 1400 with the first film layer 410 located adjacent to the contour defining surface 511 of the mold 500 in FIG. 6. When only the first film layer 410 is used, the stack of layers can be positioned with the first film layer 410 adjacent to the contour defining surface 511 of the mold 500, or away from the contour defining surface 511.

Once the stack of layers has been positioned adjacent to the contour forming portion of the mold 51, in Step 1500 heat and pressure are applied to the tapes 200 and films 410 and 420 to force those layers against the contour forming surface 511 of the mold 500 for bringing the stack of layers into that contour surface 511 of the mold 500.

In Step 1600, the layers of material are brought to a molding temperature of at least the onset melting temperature of the film layers 410 and 420, and the onset melting temperature of the first outer layer and second outer layer 210 and 220 of the tapes 200. Upon being brought to the onset of melting temperature, these components will begin to fuse forming a fusion bond between the components. Preferably, the molding temperature is at least the peak melting temperature of the film layers 410 and 420 and the peak melting temperature of the first outer layer and the second outer layer 210 and 220 of the tapes 200, or greater. After the tapes 200 and film layers 410 and 420 are brought to the molding temperature, the tapes 200 and film layers 410 and 420 are cooled in Step 1700 to, or below, the re-crystallization temperature while held in place against the contour forming surface 511 of the mold 510 in order to have the tapes 200 and films 410 and 420 set into a solid configuration holding the contour surface 511 of the mold 500.

Alternatively, a preconsolidated sheet of tape layers 300 and film layer(s) 400 can be heated above the aforementioned onset melting temperatures and loaded into a mold held at a temperature below the recrystallization temperature. By a quick closing process at sufficient pressure, the part will form adequately while the pressurized mold cools the composite to the demolding temperature.

### EXAMPLES

A highly drawn polypropylene based tape yarn was purchased from Lankhorst Indutech BV which is sold under the trade name Pure Tape. The tape yarn has a lower melting polypropylene skin layer which under heat and pressure consolidates with other yarn layers forming a rigid article. The 1020 denier yarn having dimensions of 2.2 millimeter width and 65 micrometer thickness was woven into a 2X2 left-hand twill weave with 11 picks and ends per inch. Pellets of various resins were sourced from numerous resin suppliers. Each was extruded through a slot die to form a 20 cm wide x 0.12 mm thick film.

### Example 1

A cavity was machined into an aluminum billet in the shape of a canoe of approximate dimensions 25 cm long x 5 cm wide x 3 cm deep. Holes were drilled for heater cartridges and water cooling lines, and the mold was outfitted with the heaters and plumbed for tap water cooling. A silicone plug was cast into the mold using Wacker Elastosil 4160 after first lining the vertical walls with a 0.100" adhesive-backed wax spacer from Freeman Supply to account for the material thickness in the mold. A piece of ½" thick OSB plywood was placed in contact with the silicone as it cured to provide a support structure for the silicone. Once the silicone cured at room temperature, the mold was ready for use.

Two fully overlapping layers of film were placed on the mini-canoe mold over the machined cavity. Six layers of fabric (creating a thickness of twelve layers of tape) were then placed on top of the film layers followed by a single layer of film. The silicone plug was pressed into the mold forcing the film to intimately connect with the aluminum cavity and the film-fabric-film composite to consolidate into a dense part. A pressure of about 25 bar was applied. The mold was heated to 150°C and was immediately cooled to about 95°C allowing the film-coated mini-canoe part to be removed. The heating cycle was about 20 minutes and the cooling cycle was 2-3 minutes.

### Example 2

A cavity was machined into an aluminum billet in the shape of a helmet of approximate dimensions 30 cm long x 20 cm wide x 14 cm deep. Holes were drilled for heater cartridges and water cooling lines, and the mold was outfitted with the heaters and plumbed for tap water cooling. A silicone plug was cast into the mold using Wacker Elastosil M4642 after first lining the vertical walls with a 0.100" adhesive-backed wax spacer from Freeman Supply to account for the material thickness in the mold. A piece of ½" thick OSB was placed in contact with the silicone as it cured to provide a support structure for the silicone. Once the silicone cured at room temperature, the mold was ready for use.

Two partially overlapping layers of film were placed on the helmet mold over the machined cavity. Twenty layers of fabric (having a total of 40 tape layers of thickness) were then placed on top of the film. The silicone plug was pressed into the mold forcing the film to intimately connect with the aluminum cavity and the film-fabric composite to consolidate into a dense part. A pressure of about 20 bar was applied using a bearing press. The mold was heated to 150°C and held for 2-3 minutes. The mold was then cooled to less than about 100°C, and the film-coated helmet part was removed.

### Testing and Analysis

The resins used for the film were tested for standard thermal and rheological properties as listed in Table 1. Once used in the molding process they were qualitatively rated for performance as outlined in Table 2.

**Table 1**

| Resin Properties | | | | | | | | | |
|---|---|---|---|---|---|---|---|---|---|
| Resin No. /Manf. | Grade | Polymer Base | Melt Flow¹ (g/10 min) | Melt Flow² (g/10 min) | Melt Flow³ (g/10 min) | Melt Onset/ Peak⁴ (°C) | Recrystalli zation Temp (°C) | T_{M} (°C) | Flexural modulus⁵ (MPa) |
| 1 Total | 7620Z | Propylene/ Ethylene random copoly | 11 | | 98 | 120/140 | 87 | 145 | 620 |
| 2 Exxon | LL3001.32 | LLDPE | 1 | | 12 | | | 124 | |
| 3 Total | 7825 | Propylene/ Ethylene random copoly | 30 | | 184 | 130/140 | 91 | 145 | 620 |
| 4 Dow | Dowlex 2517 | LLDPE | 25 | | 284 | | | 124 | 237 |
| 5 Basell | Hifax CA743GA | Propylene/ Ethylene random copoly | | 1.2 | 1.6 | 123/146 | 91 | | 70 |
| 6 Basell | Profax SR257M | Propylene/ Ethylene random copoly | | 2.0 | | 127/151 | 114 | | 1030 |

| | | | | | | | | | |
|---|---|---|---|---|---|---|---|---|---|
| 1 - ASTM D1238 (190C/2.16 kg) 2 - ASTM D1238 (230C/2.16 kg) 3 - (150C/21.6 kg) 4 - (2^{nd} heat 20°C/min) 5 - ASTM D790 | | | | | | | | | |

Melt flow at the molding temperature of 150°C was measured following the procedure described in ASTM D1238 using a force of 21.6 kg. The melt flow is recorded as the mass in grams of material passing through the system after 10 minutes of flow. Numerous measures of this mass flow are made and averaged.

Melt onset temperature, peak melting temperature, and recrystallization temperature were all measured using a PerkinElmer Thermal Analysis DSC at a heating and cooling rate of 20°C/min. Each sample was heated from room temperature to 200°C, cooled to 50°C, and then reheated to 200°C. The onset and peak melting temperatures were measured on the second heating. The re-crystallization temperature was taken as the peak temperature on cooling.

**Table 2**

| Film Properties After Molding | | | | |
|---|---|---|---|---|
| Resin # / Film | Adhesion | Cohesion/ Fusion | Release from mold | Comments |
| 1 7620Z | 5 | 5 | 5 | |
| 2 LL3001.32 | 1-2 | 5 | 2-3 | Incompatible and recystallization too low |
| 3 7825 | 5 | 5 | 5 | |
| 4 Dowlex 2517 | 1 | 4-5 | 1 | Incompatible and recystallization too low |
| 5 Hifax CA743GA | 4 | 5 | 3 | Too rubbery |
| 6 Profax SR257M | 3 | 3 | 5 | Didn't flow enough at mold temp |

Adhesion strength was gauged by attempting to peel the film from the part surface. Films which tore rather than release from the tape fabric were rated as a 5. Films that separated easily were rated a 1. Cohesion/fusion was rated by examining the regions where film overlap occurred due to intentional overlap or wrinkling. A high rating indicates that the film fused to itself so strongly that the overlap region could not be detected. Release from mold was judged at the demolding temperature of about 95°C. No apparent resistance to part removal from the mold was rated a 5 while an inability to remove the part was rated as a 1. The ideal film is rated a 4 or 5 in all three areas. In this case, the Total 7620Z and the Total 7825 performed most desirably.

In comparing the performance of the films outlined in Table 2 with the resin properties measured in Table 1, several material requirements are apparent. In order to achieve optimal adhesion between the film and the outer layers of the tape, the two materials must be chemically compatible. The linear low density polyethylene resin was not sufficiently compatible with the propylene ethylene copolymer in the tape outer layer to create acceptable adhesion between the tape and film materials. In order to achieve sufficient cohesion or fusion of the film to itself, the molding temperature must be near or above the Tm or peak melting temperature and above the onset melting temperature to allow for sufficient movement at the molecular level to fuse the layers together. Alternatively, for amorphous films, the film must be fused above its Tg. The ability of the film to release from the mold is an important parameter during the processing of the parts. The film must be reasonably solidified in order to be removed successfully from the mold thus the demolding temperature must be close to or below the recrystallization temperature of the base resin or for amorphous materials, the Tg. Harder or stiffer materials release more readily than rubbery or elastic ones. The flexural modulus is one measure of this property where a higher flexural modulus correlates with a stiffer material.

## Claims

1. A three dimensional molded thermoplastic article comprising a composite wall (100) having:
at least one layer of thermoplastic tapes (200) each including:
an inner layer (230) of a polymer having a draw ratio greater than 7:1 and having an inner layer peak melting temperature;
outside layers (210, 220) on opposite sides of the inner layer (230), the outside layers (210, 220) having a outside layer peak melting temperature at least 10°C lower than the inner layer peak melting temperature;
a first thermoplastic film (410) disposed at the exterior of the thermoplastic tapes (200) in the composite wall (100) and having an inside surface adhered to the outside layer (210) of a portion of the thermoplastic tape (200), wherein the composite wall (100) has a compound curvature with at least one curvature having a width over depth ratio of at least 0.2 and wherein the composite wall (100) has a thickness at the compound curvature of at least eight of the thermoplastic tapes (200), **characterized in that**
the film (410) has a portion folded over itself with the outside of the film (410) being fused to itself and held adjacent to the composite wall (100) and
wherein the film (410) is folded over in the molding process and fused together as against the thermoplastic tapes (200) as if the film is a single layer in the area of the fold over;

2. The three dimensional article in Claim 1, wherein the inner layer (230) of the thermoplastic tapes (200) comprise polypropylene or a random copolymer of propylene, and wherein the thermoplastic tape (200) has a tensile modulus of at least 8 GPa.

3. The three dimensional article in Claim 2, wherein the outer layers (210, 220) of the thermoplastic tapes (200) comprise polypropylene or a random copolymer of propylene.

4. The three dimensional article in Claim 3, wherein the first thermoplastic film (410) comprises a polypropylene or a random copolymer of propylene.

5. The three dimensional article in Claim 4, wherein the composite wall (100) further includes second thermoplastic film (420) disposed on the exterior of the thermoplastic tapes (200) in the composite wall (100) opposite to the first thermoplastic film (410), the second thermoplastic film (420) comprising a polypropylene or a random copolymer of propylene.

6. The three dimensional article in Claim 1, wherein the thermoplastic tapes (200) are grouped inside the composite wall (100) as a plurality of tape layers.

7. The three dimensional article in Claim 6, wherein the tape layers are configured as a woven, knitted, nonwoven, or bonded group of thermoplastic tapes (200).

8. The three dimensional article in Claim 1, wherein the composite wall (100) further comprises a second thermoplastic film (420) disposed on the exterior of the thermoplastic tapes (200) in the composite wall (100) opposite to the first thermoplastic film (410).

9. A method of forming a three dimensional molded thermoplastic article comprising the steps of:
a) providing a contour defining mold with a contour defining surface having a compound curvature with at least one curvature having a width to depth ratio of at least 0.2;
b) forming at least one layer of thermoplastic tape (200) each tape having an inner layer (230) and outer layers (210, 220), the inner layer (230) having a draw ratio greater than 7:1 and the outer layers (210, 220) having a peak melting temperature at least 10 °C lower than the inner layer (230);
c) stacking at least one layer of the highly drawn thermoplastic tape (200) to form a stack of the highly drawn thermoplastic tapes (200) at least eight tapes thick and covering the stack of thermoplastic tape (200) with a thermoplastic film (410) ;
d) positioning the stack of thermoplastic tapes (200) and film (410) adjacent to the compound curvature of the contour defining surface of the mold;
e) applying heat and pressure to the stack of thermoplastic tapes (200) and film (410) in order to force the stack of thermoplastic tapes (200) and film (410) against the contour surface of the mold;
f) bring the stack of thermoplastic tapes (200) and film (410) that are against the contour defining surface of the mold to a temperature above the onset melting temperature of the film (410) and the outer layers (210, 220) of the thermoplastic tape (200), wherein the film (410) is folded over in the molding process and fused together as against the thermoplastic tapes (200) as if the film is a single layer in the area of the fold over; **characterized in that**
g) after the stack of thermoplastic tapes (200) and film (410) have been heated to above the onset melting temperature, maintaining the tapes (200) and film (410) against the contour defining surface of the mold and cooling the thermoplastic tapes (200) and film (410) to a temperature below the re-crystallization temperature of the thermoplastic tapes (200) and the film (410).

10. The method in Claim 9, further including the step of providing a pressure applying mold portion, and the step of applying heat and pressure included applying pressure to the stack of thermoplastic tapes (200) and film (410) with the pressure applying mold portion.

11. The method in Claim 9, wherein the step of forming a layer of thermoplastic tape (200) includes the step of weaving the tapes into a fabric.

12. The method in Claim 9, wherein the step of forming a layer of thermoplastic tape (200) includes the step of bonding the tapes into a layer.

13. The method in Claim 9, wherein the step of stacking the thermoplastic tape (200) and film (410) includes stacking a second film (420) on the opposite side of the thermoplastic tape (200) from the first film (410).

14. The method in Claim 9, wherein the inner layer (230) of the thermoplastic tapes (200) having a draw ratio greater than 7:1 comprise polypropylene or a random copolymer of propylene.

15. The method in claim 9, wherein step e) includes forcing the film (410) to fold over itself and against the thermoplastic tapes (200) and wherein step f) includes causing the outside surface of the film (410) in contact with each other at the fold to fuse together.

## Patentansprüche

1. Dreidimensionaler thermoplastischer Formartikel, der eine Verbundwerkstoffwand (100) umfasst, die folgendes aufweist:
mindestens eine Schicht thermoplastischer Bänder (200), die jeweils folgendes einschließen:
eine innere Schicht (230) eines Polymers, das ein Zugverhältnis von größer als 7:1 und eine Innenschicht-Spitzenschmelztemperatur aufweist;
äußere Schichten (210, 220), auf gegenüberliegenden Seiten der inneren Schicht (230), wobei die äußeren Schichten (210, 220) eine Außenschicht-Spitzenschmelztemperatur von mindestens 10°C unterhalb der Innenschicht-Spitzenschmelztemperatur aufweisen;
ein erster thermoplastischer Film (410), der an der Außenseite der thermoplastischen Bänder (200) in der Verbundwerkstoffwand (100) angeordnet ist und eine innere Oberfläche aufweist, die an der äußeren Schicht (210) eines Teils des thermoplastischen Bandes (200) haftet, wobei die Verbundwerkstoffwand (100) eine zusammengesetzte Krümmung aufweist mit mindestens einer Krümmung, die ein Breite-über-Tiefe-Verhältnis von mindestens 0,2 aufweist und wobei die Verbundwerkstoffwand (100) eine Dicke an der zusammengesetzten Krümmung von mindestens acht der thermoplastischen Bänder (200) aufweist und dadurch charakterisiert ist, dass
der Film (410) einen gefalteten Teil aufweist bei dem die Außenseite des Films (410) mit sich selbst verschmolzen ist und anliegend an der Verbundwerkstoffwand (100) gehalten wird und
wobei der Film (410) bei dem Formprozess gefaltet wird und gegen die thermoplastischen Bänder (200) so zusammengeschmolzen wird, als sei der Film eine einzige Schicht im Bereich des Umfaltens.

2. Dreidimensionaler Artikel gemäß Anspruch 1, worin die innere Schicht (230) der thermoplastischen Bänder (200) Polypropylen oder ein Zufalls-Copolymer des Polypropylens umfasst und worin das thermoplastische Band (200) ein Zugmodul von mindestens 8 GPa aufweist.

3. Dreidimensionaler Artikel gemäß Anspruch 2, worin die äußeren Schichten (210, 220) der thermoplastischen Bänder (200) Polypropylen oder ein Zufalls-Copolymer des Polypropylens umfassen.

4. Dreidimensionaler Artikel gemäß Anspruch 3, worin der erste thermoplastische Film (410) ein Polypropylen oder ein Zufalls-Copolymer des Polypropylens umfasst.

5. Dreidimensionaler Artikel gemäß Anspruch 4, worin die Verbundwerkstoffwand (100) weiterhin einen zweiten thermoplastischen Film (420) einschließt, der am Äußeren der thermoplastischen Bänder (200) in der Verbundwerkstoffwand (100) gegenüberliegend des ersten thermoplastischen Films (410) angeordnet ist, wobei der zweite thermoplastische Film (420) ein Polypropylen oder ein Zufalls-Copolymer des Polypropylens umfasst.

6. Dreidimensionaler Artikel gemäß Anspruch 1, worin die thermoplastischen Bänder (200) innerhalb der Verbundwerkstoffwand (100) als eine Vielzahl von Bandschichten gruppiert sind.

7. Dreidimensionaler Artikel gemäß Anspruch 6, worin die Bandschichten als Gewebe, Gewirk, Vliesstoff oder als verknüpfte Gruppe der thermoplastischen Bänder (200) ausgestaltet sind.

8. Dreidimensionaler Artikel gemäß Anspruch 1, worin die Verbundwerkstoffwand (100) weiterhin einen zweiten thermoplastischen Film (420) umfasst, der am Äußeren der thermoplastischen Bänder (200) in der Verbundwerkstoffwand (100) gegenüberliegend des ersten thermoplastischen Films (410) angeordnet ist.

9. Verfahren zur Herstellung eines dreidimensionalen thermoplastischen Formartikels, das die folgenden Schritte umfasst:
a) Bereitstellen einer Form-definierenden Kontur mit einer Oberflächen-definierenden Kontur, die eine zusammengesetzte Krümmung mit mindestens einer Krümmung aufweist, die ein Breite-zu-Tiefe-Verhältnis von mindestens 0,2 aufweist;
b) Bilden mindestens einer Schicht eines thermoplastischen Bandes (200), wobei jedes Band eine innere Schicht (230) und äußere Schichten (210, 220) aufweist und die innere Schicht (230) ein Zugverhältnis von größer als 7:1 aufweist und die äußeren Schichten (210, 220) eine Spitzenschmelztemperatur aufweisen, die mindestens 10°C unterhalb der inneren Schicht (230) ist;
c) Stapeln mindestens einer Schicht des hoch gezogenen thermoplastischen Bandes (200) zur Bildung eines Stapels der hoch gezogenen thermoplastischen Bänder (200), der mindestens acht Bänder dick ist und Bedecken des Stapels des thermoplastischen Bandes (200) mit einem thermoplastischen Film (410);
d) Positionieren des Stapels der thermoplastischen Bänder (200) und des Films (410) benachbart zu der zusammengesetzten Krümmung der Oberflächen-definierenden Kontur der Form;
e) Anwenden von Wärme und Druck an dem Stapel thermoplastischer Bänder (200) und dem Film (410), um den Stapel der thermoplastischen Bänder (200) und den Film (410) gegen die Oberflächenkontur der Form zu zwingen;
f) Bringen des Stapels der thermoplastischen Bänder (200) und des Films (410), die gegen die Oberflächen-definierende Kontur der Form gezwungen sind, auf eine Temperatur oberhalb der Anfangsschmelztemperatur des Films (410) und der äußeren Schichten (210, 220) der thermoplastischen Bänder (200), wobei der Film (410) während dem Formverfahren gefaltet und mit den thermoplastischen Bändern (200) so verschmolzen wird, als sei der Film eine einzige Schicht im Bereich des Umfaltens, **dadurch gekennzeichnet, dass**
g) nachdem der Stapel der thermoplastischen Bänder (200) und des Films (410) auf eine Temperatur oberhalb der Anfangsschmelztemperatur erwärmt wurden, die Bänder (200) und der Film (410) weiterhin gegen die Oberflächen-definierende Kontur der Form gehalten werden und die thermoplastischen Bänder (200) und der Film (410) auf eine Temperatur unterhalb der Rekristallisationstemperatur der thermoplastischen Bänder (200) und des Films (410) abgekühlt werden.

10. Verfahren gemäß Anspruch 9, das weiterhin den Schritt des Bereitstellens eines Druck-anwendenden Formteils und den Schritt des Anwendens von Wärme und Druck, einschließlich des Anwendens von Druck auf den Stapel der thermoplastischen Bänder (200) und des Films (410), mit dem Druck-anwendenden Formteil einschließt.

11. Verfahren gemäß Anspruch 9, wobei der Schritt des Bildens einer Schicht des thermoplastisches Bandes (200) den Schritt des Webens des Bandes zu einem Gewebe einschließt.

12. Verfahren gemäß Anspruch 9, wobei der Schritt des Bildens einer Schicht des thermoplastisches Bandes (200) den Schritt des Verknüpfens der Bänder zu einer Schicht einschließt.

13. Verfahren gemäß Anspruch 9, wobei der Schritt des Stapelns des thermoplastischen Bandes (200) und des Films (410) das Stapeln eines zweiten Films (420) auf der gegenüberliegenden Seite des thermoplastischen Bandes (200) von dem ersten Film (410) einschließt.

14. Verfahren gemäß Anspruch 9, wobei die innere Schicht (230) der thermoplastischen Bänder (200), die ein Zugverhältnis von größer als 7:1 aufweisen, Polypropylen oder ein Zufalls-Copolymer des Polypropylens umfasst.

15. Verfahren gemäß Anspruch 9, wobei Schritt e) Zwingen des Films (410) zur Umfaltung mit sich selbst und gegen die thermoplastischen Bänder (200) einschließt und wobei Schritt f) ein Verursachen des Zusammenschmelzens der äußeren Oberfläche des Films (410), die an der Stelle der Faltung in Kontakt mit jeder anderen ist, einschließt.

## Revendications

1. Article thermoplastique moulé tridimensionnel comprenant une paroi composite (100) comprenant :
au moins une couche de bandes thermoplastiques (200) chacune incluant :
une couche intérieure (230) d'un polymère ayant un rapport d'étirage supérieur à 7:1 et ayant une température de fusion maximale de la couche intérieure ;
des couches extérieures (210, 220) sur des côtés opposés de la couche intérieure (230), les couches extérieures (210, 220) ayant une température de fusion maximale de couche extérieure inférieure d'au moins 10°C à la température de fusion maximale de la couche intérieure ;
un premier film thermoplastique (410) disposé à l'extérieur des bandes thermoplastiques (200) dans la paroi composite (100) et présentant une surface intérieure qui adhère à la couche extérieure (210) d'une partie de la bande thermoplastique (200), où la paroi composite (100) présente une courbure composée avec au moins une courbure ayant un rapport largeur/profondeur d'au moins 0,2 et
dans lequel la paroi composite (100) a une épaisseur au niveau de la courbure composée d'au moins huit des bandes thermoplastiques (200), **caractérisée en ce que**
le film (410) a une partie rabattue sur elle-même, l'extérieur du film (410) étant fusionné à lui-même et tenu adjacent à la paroi composite (100) et
où le film (410) est rabattu dans le processus de moulage et fusionné contre les bandes thermoplastiques (200) comme si le film était une seule couche dans la zone du rabattement.

2. Article tridimensionnel dans la revendication 1, dans lequel la couche intérieure (230) des bandes thermoplastiques (200) comprend du polypropylène ou un copolymère statistique de propylène, et dans lequel la bande thermoplastique (200) a un module d'élasticité d'au moins 8 GPa.

3. Article tridimensionnel dans la revendication 2, dans lequel les couches extérieures (210, 220) des bandes thermoplastiques (200) comprennent du polypropylène ou un copolymère statistique de propylène.

4. Article tridimensionnel dans la revendication 3, dans lequel le premier film thermoplastique (410) comprend du polypropylène ou un copolymère statistique de propylène.

5. Article tridimensionnel dans la revendication 4, dans lequel la paroi composite (100) comprend en outre un deuxième film thermoplastique (420) disposé à l'extérieur des bandes thermoplastiques (200) dans la paroi composite (100) en regard du premier film thermoplastique (410), le deuxième film thermoplastique (420) comprenant du polypropylène ou un copolymère statistique de propylène.

6. Article tridimensionnel dans la revendication 1, dans lequel les bandes thermoplastiques (200) sont regroupées à l'intérieur de la paroi composite (100) comme une pluralité de couches de bandes.

7. Article tridimensionnel dans la revendication 6, dans lequel les couches de bandes sont configurées comme un groupe de bandes thermoplastiques (200) tissées, tricotées, non tissées ou collées.

8. Article tridimensionnel dans la revendication 1, dans lequel la paroi composite (100) comprend en outre un deuxième film thermoplastique (420) disposé à l'extérieur des bandes thermoplastiques (200) dans la paroi composite (100) en regard du premier film thermoplastique (410).

9. Procédé de formation d'un article thermoplastique moulé tridimensionnel comprenant les étapes qui consistent à :
a) fournir un moule contour définissant un contour avec une surface définissant un contour ayant une courbure composée avec au moins une courbure ayant un rapport largeur/profondeur d'au moins 0,2 ;
b) former au moins une couche de bandes thermoplastique (200) chaque bande ayant une couche intérieure (230) et des couches extérieures (210, 220), la couche intérieure (230) ayant un rapport d'étirage supérieur à 7:1 et les couches extérieures (210, 220) ayant une température de fusion maximale d'au moins 10°C inférieure à celle de la couche intérieure (230);
c) empiler au moins une couche de la bande thermoplastique (200) hautement étirée pour former une pile des bandes thermoplastiques (200) hautement étirées d'une épaisseur d'au moins huit bandes et couvrant la pile de bandes thermoplastiques (200) par un film thermoplastique (410)
d) positionner la pile de bandes thermoplastiques (200) et du film (410) adjacente à la courbure composée de la surface définissant un contour du moule ;
e) appliquer de la chaleur et de la pression à la pile de bandes thermoplastiques (200) et du film (410) afin de forcer la pile de bandes thermoplastiques (200) et du film (410) contre la surface de contour du moule;
f) porter la pile de bandes thermoplastiques (200) et du film (410) qui sont contre la surface définissant un contour du moule à une température supérieure à la température de début de fusion du film (410) et des couches extérieures (210, 220) de la bande thermoplastique (200), où le film (410) est rabattu dans le processus de moulage et fusionné contre les bandes thermoplastiques (200) comme si le film était une seule couche dans la zone de rabattement, **caractérisé en ce que**
g) après chauffage de la pile de bandes thermoplastiques (200) et du film (410) au-dessus de la température de début de fusion, de maintenir les bandes (200) et le film (410) contre la surface définissant un contour du moule et refroidir les bandes thermoplastiques (200) et le film (410) à une température inférieure à la température de recristallisation des bandes thermoplastiques (200) et du film (410).

10. Procédé dans la revendication 9, comportant en outre l'étape qui consiste à fournir une partie de moule d'application de pression, et l'étape qui consiste à appliquer de la chaleur et de la pression y compris l'application de pression à la pile des bandes thermoplastiques (200) et du film (410) avec la partie de moule d'application de pression.

11. Procédé dans la revendication 9, dans lequel l'étape de formation d'une couche de bande thermoplastique (200) comporte l'étape de tissage des bandes en un tissu.

12. Procédé dans la revendication 9, dans lequel l'étape de formation d'une couche de bande thermoplastique (200) comprend l'étape de collage des bandes en une couche.

13. Procédé dans la revendication 9, dans lequel l'étape d'empilement de la bande thermoplastique (200) et du film (410) comporte l'empilement d'un deuxième film (420) sur le côté opposé de la bande thermoplastique (200) en partant du premier film (410).

14. Procédé dans la revendication 9, dans lequel la couche intérieure (230) des bandes thermoplastiques (200) ayant un rapport d'étirage supérieur à 7:1 comprend du polypropylène ou un copolymère statistique de propylène.

15. Procédé dans la revendication 9, dans lequel l'étape e) comporte le fait de forcer le film (410) à se rabattre sur lui-même et contre les bandes thermoplastiques (200) et où l'étape f) comporte le fait d'amener la surface extérieure du film (410) en contact mutuel au niveau de la pile à fusionner ensemble.
